# EUROPEAN PATENT APPLICATION

(11) **EP 0 990 930 A2**
(43) Date of publication of application: **05.04.2000**
(21) Application number: 99202884.5
(22) Date of filing: 06.09.1999
(51) Int. Cl.: G02B 6/38

(54) **Optical connector**

(30) Priority: 29.09.1998 DE 19844688
(71) Applicant: Delphi Technologies, Inc., Troy, MI 48007 (US)
(72) Inventor: Diedrich, Udo, 58256 Ennepetal (DE); Halbach, Paul Gerhard, 42369 Wuppertal (DE)
(74) Representative: Denton, Michael John

(57) **Abstract**

An optical connector (10) for attachment to the end of a pair of optical fibres comprising a connector body (12) having first and second channels (20,22) which extend substantially parallel to one another, each of which have a shaped inner wall (28,36) opposite an open side (30,38); a cover (14) attachable to the body and having a first shaped portion (40) closing the open side of the first channel and a second shaped portion (42) closing the open side of the second channel; a first optical ferrule (16) for attachment to one of the optical fibres and positionable in the first channel such that a first outer wall (48) of the first ferrule is adjacent the first shaped portion of the cover and a second outer wall (50) is adjacent the shaped inner wall of the first channel; and a second optical ferrule (18) for attachment to the other of the optical fibres and positionable in the second channel such that a first outer wall (60) of the second ferrule is adjacent the second shaped portion of the cover and a second outer wall (62) is adjacent the shaped inner wall of the second channel; wherein the first and second outer walls of the first ferrule are substantially identical and have portions corresponding in shape to the shape of the first shaped portion of the cover and the shaped inner wall of the first channel; wherein the first and second outer walls of the second ferrule are substantially identical and have portions corresponding in shape to the shape of the second shaped portion of the cover and the shaped inner wall of the second channel; and wherein the shape of the first and second outer walls of the first ferrule are different from the shape of the first and second outer walls of the second ferrule. Provides indexing for the ferrules in a connector which is easy to assembly.

## Description

### Technical Field

The present invention relates to an optical connector for attachment to the end of a pair of optical fibres.

### Background of the Invention

It is known to provide an optical connection between a pair of optical fibres (one fibre for transmitting signals and the other fibre for receiving signals) and an electrical/optical device or corresponding optical fibres. Such connection systems include an optical connector comprising an optical ferrule attached to the end of each optical fibre, and a housing within which the ferrules are mounted. The connector mates with a corresponding connector on the electrical/optical device or the corresponding optical fibres. In such an optical connector, an indexing device is required to ensure that the transmitting fibre and receiving fibre are correctly positioned in the connector. Known indexing devices (such as the indexing tabs disclosed in EP-A-0248902) tend to protrude and thereby create difficulties during assembly of the connector.

### Summary of the Invention

It is an object of the present invention to overcome the above mentioned problem.

An optical connector in accordance with the present invention for attachment to the end of a pair of optical fibres comprises a connector body having first and second channels which extend substantially parallel to one another, each of which have a shaped inner wall opposite an open side; a cover attachable to the body and having a first shaped portion closing the open side of the first channel and a second shaped portion closing the open side of the second channel; a first optical ferrule for attachment to one of the optical fibres and positionable in the first channel such that a first outer wall of the first ferrule is adjacent the first shaped portion of the cover and a second outer wall is adjacent the shaped inner wall of the first channel; and a second optical ferrule for attachment to the other of the optical fibres and positionable in the second channel such that a first outer wall of the second ferrule is adjacent the second shaped portion of the cover and a second outer wall is adjacent the shaped inner wall of the second channel; wherein the first and second outer walls of the first ferrule are substantially identical and have portions corresponding in shape to the shape of the first shaped portion of the cover and the shaped inner wall of the first channel; wherein the first and second outer walls of the second ferrule are substantially identical and have portions corresponding in shape to the shape of the second shaped portion of the cover and the shaped inner wall of the second channel; and wherein the shape of the first and second outer walls of the first ferrule are different from the shape of the first and second outer walls of the second ferrule.

The external shape of the optical ferrules provides the required indexing. There is no need for protruding indexing tabs. As a consequence, the present invention provides options for insertion direction of the optical ferrules, and options for 180 degree rotation of the optical ferrules, which provides easier assembly of the optical connector.

### Brief Description of the Drawings

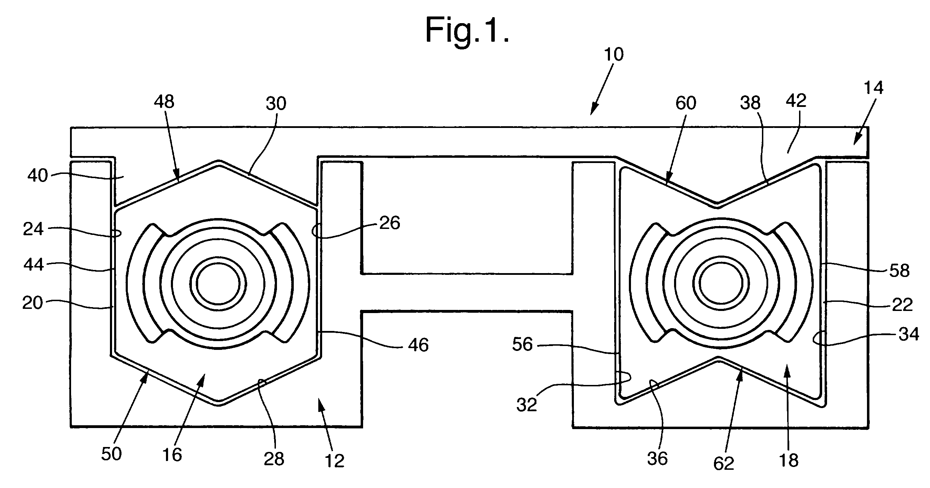

The present invention will now be described, by way of example, with reference to the accompanying drawings, in which:-
Figure 1 is an end view of an optical connector in accordance with the present invention;

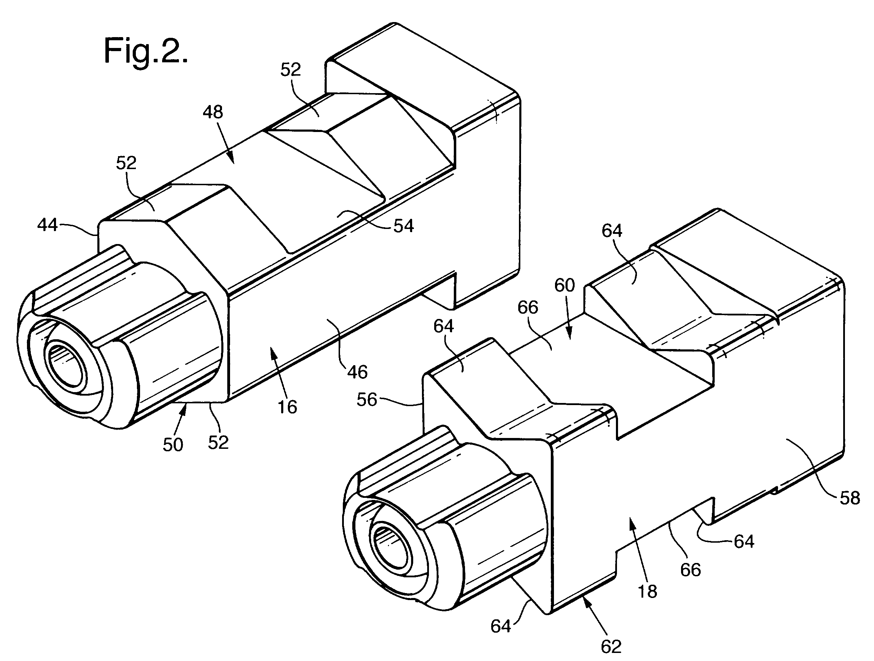

Figure 2 is a perspective view of the pair of optical fibre ferrules of the optical connector of Figure 1; and

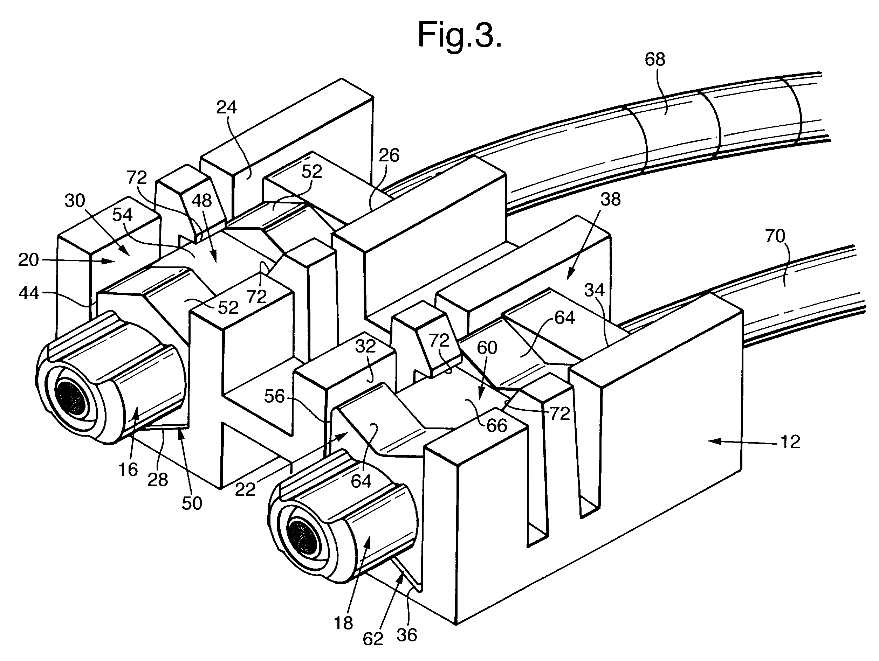

Figure 3 is a perspective view of the optical fibre ferrules (attached to optical fibres) and the connector body of the optical connector of Figure 1.

### Description of the Preferred Embodiment

Referring to the drawings, the optical connector 10 in accordance with the present invention comprises a connector body 12; a cover 14; and first and second optical fibre ferrules 16,18. The cover 14 is secured to the body 12 in any convenient way, such as by a snap fit or screws (not shown).

The body 12 has a first channel 20 which extends longitudinally and receives the first ferrule 16; and a second channel 22 which extends longitudinally, substantially parallel to the first channel, and receives the second ferrule 18. The first channel 20 is defined by side walls 24,26 which are substantially flat and substantially parallel to one another; a shaped inner wall 28; and an open side 30 opposite the inner wall. The second channel 22 is defined by side walls 32,34 which are substantially flat and substantially parallel to one another; a shaped inner wall 36; and an open side 38 opposite the inner wall. The open sides 30,38 of the first and second channels 20,22 are closed by the cover 14. The cover 14 has a first shaped portion 40 closing the first channel 20, and a second shaped portion 42 closing the second channel 22. The first shaped portion 40 has a shape which is substantially identical to the shape of the inner wall 28 of the first channel 20. The second shaped portion 42 has a shape which is substantially identical to the shape of the inner wall 36 of the second channel 22. The shape of the first shaped portion 40 and the inner wall 28 of the first channel 20 is different from the shape of the second shaped portion 42 and the inner wall 36 of the second channel 22. In the present embodiment, the shape of the first shaped portion 40 and the inner wall 28 of the first channel 20 is an inside polygon with the corners of the polygon extending in the axial direction of the first channel, and the shape of the second shaped portion 42 and the inner wall 36 of the second channel 22 is an outside polygon with the corners of the polygon extending in the axial direction of the second channel. Other suitable different shapes may be used. Preferably, the shapes are symmetrical about the respective longitudinal axes of the channels 20,22.

The first ferrule 16 has outer side walls 44,46 which are substantially flat and substantially parallel to one another; and an upper outer wall 48 and a lower outer wall 50 which are substantially identical. The upper wall 48 and the lower wall 50 each have a pair of shaped portions 52 axially separated by a substantially flat portion 54. The shaped portions 52 are shaped to correspond to the first shaped portion 40 on the cover 14 and the shape of the inner wall 28 of the first channel 20 - that is, in the present embodiment, the shaped portions 52 are shaped as an outside polygon. The second ferrule 18 has outer side walls 56,58 which are substantially flat and substantially parallel to one another; and an upper outer wall 60 and a lower outer wall 62 which are substantially identical. The upper wall 60 and the lower wall 62 each have a pair of shaped portions 64 axially separated by a substantially flat portion 66. The shaped portions 64 are shaped to correspond to the second shaped portion 42 on the cover 14 and the shape of the inner wall 36 of the second channel 22 - that is, in the present embodiment, the shaped portions 64 are shaped as an inside polygon.

The first ferrule 16 is positioned in the first channel 20 with the side walls 24,26,44,46 adjacent one another and the shaped portions 52 of the lower wall 50 of the first ferrule adjacent the shaped inner wall 28 of the first channel. Alternatively, the first ferrule 16 may be rotated through 180 degrees about its longitudinal axis so that the shaped portions 52 of the upper wall 48 are positioned adjacent the shaped inner wall 28 of the first channel 20. Similarly, the second ferrule 18 is positioned in the second channel 22 with the side walls 32,34,56,58 adjacent one another and the shaped portions 64 of the lower wall 62 of the second ferrule adjacent the shaped inner wall 36 of the second channel. Alternatively, the second ferrule 18 may be rotated through 180 degrees about its longitudinal axis so that the shaped portions 64 of the upper wall 60 are positioned adjacent the shaped inner wall 36 of the second channel 22. After positioning of the first and second ferrules 16,18 in the first and second channels 20,22, respectively, the cover 14 is attached to the body 12 with the first shaped portion 40 of the cover adjacent the shaped portions 52 of the upper or lower wall 48,50 of the first ferrule, and the second shaped portion 42 of the cover adjacent the shaped portions 64 of the upper or lower wall 60,62 of the second ferrule. In the present invention, it is impossible to attach the cover 14 to the body 12 if the incorrect ferrule is placed in one of the channels. Such an arrangement therefore assists in the correct installation of the ferrules 16,18. This is particularly important, for example, where the first ferrule 16 is attached to the end of an optical fibre 68 which is used for carrying transmitting signals, and the second ferrule 18 is attached to the end of an optical fibre 70 which is used for carrying receiving signals.

The first and second ferrules 16,18 may be positioned in their respective channels 20,22 by insertion through the open side 30,38 of the channel in a direction substantially perpendicular to the longitudinal axes of the channels. In this arrangement, the side walls 24,26;32,34 of the first and second channels 20,22 may include resilient latch tangs 72 which make a snap fit with the flat portions 54,66 of the upper walls 48,60 (or the lower walls 50,62) of the first and second ferrules 16,18 to initially retain the ferrules before attachment of the cover 14. Alternatively, the first and second ferrules 16,18 may be positioned in their respective channels 20,22 by insertion in the channel in an axial direction. In this case, the cover 14 may be secured to the body 12 before insertion of the ferrules 16,18, Also, in this case, or where the latch tangs 72 are not present, the flat portions 54,66 of the first and second ferrules 16,18 may be omitted, with the shaped portions 52,64 of the upper walls 48,60 and the lower walls 50,62 of each ferrule being continuous.

The present invention uses the external shape of the ferrules 16,18 to provide the required indexing. There is no need for protruding indexing tabs. As a consequence, the present invention provides options for ferrule 16,18 insertion direction, and ferrule rotation, which makes assembly of the connector 10 easier.

## Claims

1. An optical connector (10) for attachment to the end of a pair of optical fibres (68,70) comprising a connector body (12) having first and second channels (20,22) which extend substantially parallel to one another, each of which have a shaped inner wall (28,36) opposite an open side (30,38); a cover (14) attachable to the body and having a first shaped portion (40) closing the open side of the first channel and a second shaped portion (42) closing the open side of the second channel; a first optical ferrule (16) for attachment to one of the optical fibres and positionable in the first channel such that a first outer wall (48) of the first ferrule is adjacent the first shaped portion of the cover and a second outer wall (50) is adjacent the shaped inner wall of the first channel; and a second optical ferrule (18) for attachment to the other of the optical fibres and positionable in the second channel such that a first outer wall (60) of the second ferrule is adjacent the second shaped portion of the cover and a second outer wall (62) is adjacent the shaped inner wall of the second channel; wherein the first and second outer walls of the first ferrule are substantially identical and have portions (52) corresponding in shape to the shape of the first shaped portion of the cover and the shaped inner wall of the first channel; wherein the first and second outer walls of the second ferrule are substantially identical and have portions (64) corresponding in shape to the shape of the second shaped portion of the cover and the shaped inner wall of the second channel; and wherein the shape of the first and second outer walls of the first ferrule are different from the shape of the first and second outer walls of the second ferrule.

2. An optical connector as claimed in Claim 1, wherein the shapes of the first shaped portion (40) of the cover (14) and the shaped inner wall (28) of the first channel (20) are symmetrical about the longitudinal axis of the first channel, and the shapes of the second shaped portion (42) of the cover (14) and the shaped inner wall (36) of the second channel (22) are symmetrical about the longitudinal axis of the second channel.

3. An optical connector as claimed in Claim 1 or Claim 2, wherein the shape of the first shaped portion (40) of the cover (14) and the shaped inner wall (28) of the first channel (20) is an inside polygon with corners extending in the axial direction of the first channel and the shape of the portions (52) of the first and second outer walls (48,50) of the first ferrule (16) are a corresponding outside polygon; and wherein the shape of the second shaped portion (42) of the cover (14) and the shaped inner wall (36) of the second channel (22) is an outside polygon with corners extending in the axial direction of the second channel and the shape of the portions (64) of the first and second outer walls (60,62) of the second ferrule (18) are a corresponding inside polygon.

4. An optical connector as claimed in Claim 3, wherein the first (48,60) and second (50,62) outer walls of each ferrule (16,18) each comprises a pair of the shaped portions (52,64) axially separated by a substantially flat portion (54,66).

5. An optical connector as claimed in Claim 4, wherein the first and second channels (20,22) have a latch tang (72) in each side wall (24,26;32,34) thereof which make a snap fit with the flat portion (54,66) of the first outer wall (48,60) of the first and second ferrule (16,18) on insertion of each ferrule in its respective channel.
